# EUROPEAN PATENT SPECIFICATION

(11) **EP 1 847 365 B1**
(45) Date of publication and mention of the grant of the patent: **16.05.2012**
(21) Application number: 07104715.3
(22) Date of filing: 22.03.2007
(51) Int. Cl.: B28B 11/04, G05D 11/13, B01F 13/10, B01F 15/00, B01F 15/04

(54) **Method for feeding silk-screen pastes to a machine for the decoration of ceramic products**
Verfahren zur Zuführung von Siebdruckpasten zu einer Maschine zur Dekorierung von Keramikprodukten
Procédé d'alimentation en pâtes de sérigraphie d'une machine pour la décoration de produits en céramique

(30) Priority: 21.04.2006 IT BO20060305
(43) Date of publication of application: 24.10.2007
(73) Proprietor: Vici Ceramics S.r.l., 47822 Santarcangelo di Romagna (RN) (IT)
(72) Inventor: Vici, Francesco, 47900 Rimini (IT)
(74) Representative: Gotra, Stefano

(56) References cited:
- EP-A- 1 121 986
- DE-C1- 19 720 911
- NL-A- 8 900 946

## Description

The present invention relates to a method for feeding silk-screen pastes to a machine for the decoration of ceramic products.

Specifically, the present invention relates to a method for feeding silk-screen pastes of the type using a main reservoir for a silk-screen paste; a first secondary reservoir for a solvent; and a second secondary reservoir containing the same silk-screen paste contained in the main reservoir.

To control the feeding of the silk-screen paste to the machine for the decoration of ceramic products, the known feeding devices of the above-described type require the presence of an operator, who measures the actual value of at least one chemical-physical characteristic of the silk-screen paste in the main reservoir (for instance, the density or viscosity), and feeds the main reservoir with the solvent of the first secondary reservoir and/or with the silk-screen paste of the second secondary reservoir when the actual value measured is different from a determined reference value.

From what has been set forth above, there follows that the known feeding devices of the above-described type have some drawbacks mainly following the fact that the measurements of the actual value of the mentioned chemical-physical characteristic and the feeding operations of the main reservoir with the two secondary reservoirs are carried out manually at predetermined time intervals, they are relatively imprecise, and do not guarantee a correct feeding of the silk-screen paste to the machine for the decoration of ceramic products.

EP11221986 discloses device for coating cans with a coating material which involves determining the number of can to which the coating material is applied, determining the total amount of coating material applied to the can components and determining the average amount of coating material applied to each component in order to determine the correct amount of coating.

NL8900946 shows a process for preparing silk-screen pastes according to the preamble of claim 1, in which viscosity and temperature are controlled.

DE19720911 shows a process for controlling the viscosity of a coating.

It is an object of the present invention to provide a *method* for feeding silk-screen pastes to a machine for the decoration of ceramic products which is free from the above-described drawbacks.

According to the present invention there is provided a *method* for feeding silk-screen pastes to a machine for the decoration of ceramic products according to the accompanying claims.

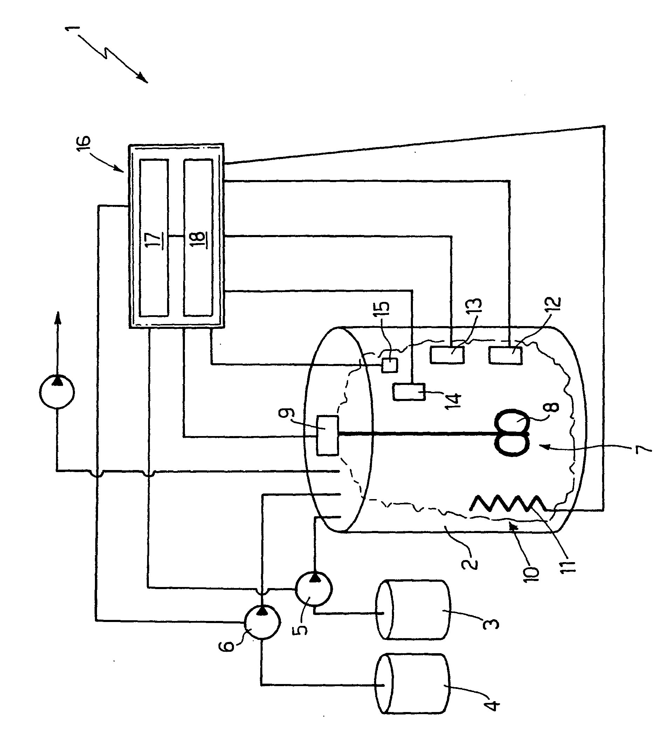

The present invention will now be described with reference to the accompanying figure, which diagrammatically show a non-limitative embodiment thereof.

With reference to the accompanying drawing, numeral 1 indicates, as a whole, a device for feeding silk-screen pastes to a machine (not shown) for the decoration of ceramic products (not shown).

The device 1 comprises a main reservoir 2 for a silk-screen paste, a first secondary reservoir 3 for a solvent, and a second secondary reservoir 4 containing 25 the same silk-screen paste contained in the reservoir 2.

The solvent contained in the reservoir 3 is fed to the reservoir 2 by means of a feeding pump 5, in this case a diaphragm pump, whereas the silk-screen paste contained in the reservoir 4 is fed to the reservoir 2 by means of a feeding pump 6, in this case a diaphragm pump.

The silk-screen paste contained in the reservoir 2 is maintained in motion by means of a mixing device 7 comprising a rotating paddle 8 mounted so as to rotate, with respect to the reservoir 2, under the thrust of an electric motor 9.

The reservoir 2 is further provided with a thermoregulation device 10 comprising an electric resistor 11 adapted to selectively control the temperature of the silk-screen paste contained in the reservoir 2, three measuring means 12, 13, 14 of the known type adapted to measure the temperature, the density and, respectively, the viscosity of the silk-screen paste contained in the reservoir 2, and a level sensor 15 adapted to measure the level of the silk-screen paste in the reservoir 2 itself.

The measuring means 12, 13, 14 and 15 are connected to an electronic control unit 16 comprising a storing unit 17 holding a reference value for each of the mentioned chemical-physical characteristics of the silk-screen paste, i.e. temperature, density, and viscosity, and a reference value for the level of the silk-screen paste in the reservoir 2, and a comparing unit 18 adapted to compare the actual values of temperature, density, viscosity and level measured by the corresponding devices 12, 13, 14 and the sensor 15 with the corresponding reference values of the unit 17.

In use, the operation of the thermoregulation device 10 and of the feeding pumps 5, 6 is selectively controlled in response to a signal coming from the control unit 16.

Specifically:
when the actual value of the temperature of the silk-screen paste in the reservoir 2 measured by the device 12 is lower than the corresponding reference value stored in the *storing* unit 17, the resistor 11 is activated to heat the silk-screen paste;
when the actual value of the density of the silk-screen paste in the reservoir 2 measured by the measuring means 13 is higher than the corresponding reference value stored in the *storing* unit 17, the *feeding* pump 5 is activated to feed the solvent contained in the reservoir 3 to the reservoir 2;
when the actual value of the density of the silk-screen paste in the reservoir 2 measured by the *measuring means* 13 is lower than the corresponding reference value stored in the *storing* unit 17, the *feeding* pump 6 is activated to feed the silk-screen paste contained in the reservoir 4 to the reservoir 2;
when the actual value of the viscosity of the silk-screen paste in the reservoir 2 measured by the *measuring means* 14 is different from the corresponding reference value stored in the *storing* unit 17, the *feeding* pump 6 is activated to feed the silk-screen paste contained in the reservoir 4 to the reservoir 2; and
when the actual value of the level of the silk-screen paste in the reservoir 2 measured by the *measuring means* 15 is lower than the corresponding reference value stored in the *storing* unit 17, the *feeding* pump 6 is activated to feed the silk-screen paste contained in the reservoir 4 to the reservoir 2.

According to a variant (not shown), the level *measuring means* 15 is eliminated and replaced with a mechanical level detector, which is connected to the electronic control 10 unit 16 for the activation of the *feeding* pump 6, and does not imply the storage in the storing unit 17 of a reference value for the level of the silk-screen paste in the reservoir 2.

## Claims

1. A method for feeding silk-screen pastes to a machine for the decoration of ceramic products, the method using
a main reservoir (2) for a silk-screen paste; a first secondary reservoir (3) for a solvent; and a second secondary reservoir (4) for said silk-screen paste; and employing logical control means (12, 13, 14, 15, 16) which comprise a storing *unit* (17) to hold at least one reference value of at least one chemical-physical characteristic of the silk-screen paste; measuring means (12, 13, 14, 15) to measure an actual value of said chemical-physical characteristic in the main reservoir (2), and comparing means (18) to compare said actual value with said reference value; being provided to feed the main reservoir (2) with the solvent of the first secondary reservoir (3) and/or with the silk-screen paste of the second secondary reservoir (4) following a signal of said logical control means (12,20 13, 14, 15, 16), when the actual value of the density of the silk-screen paste in the reservoir 2 measured by the measuring means 13 is higher than the corresponding reference value stored in the storing unit 17, the feeding pump 5 is activated to feed the solvent contained in the reservoir to the reservoir 2; **characterized in that**:
when the actual value of the temperature of the silk-screen paste in the reservoir 2 measured by the device 12 is lower than the corresponding reference value stored in the storing unit 17, the resistor 11 is activated to heat the silk-screen paste;
when the actual value of the density of the silk-screen paste in the reservoir 2 measured by the measuring means 13 is lower than the corresponding reference value stored in the storing unit 17, the feeding pump 6 is activated to feed the silk-20 screen paste contained in the reservoir 4 to the reservoir 2;
when the actual value of the viscosity of the silk-screen paste in the reservoir 2 measured by the measuring means 14 is different from the corresponding reference value stored in the storing unit 17, the feeding pump 6 is activated to feed the silk-screen paste contained in the reservoir 4 to the reservoir2; and
when the actual value of the level of the silk-screen paste in the reservoir 2measured by the measuring means 15 is lower than the corresponding reference value stored in the unit storing 17, the feeding pump is activated to feed the silk-screen paste contained in the reservoir 4 to the reservoir 2.

2. A method according to claim 1, wherein said measuring means (12, 13, 14, 15) are adapted to continuously measure the actual value of said chemical-physical characteristic in the main reservoir (2).

## Patentansprüche

1. Verfahren zur Zuführung von Siebdruckpasten zu einer Maschine zur Dekorierung von Keramikprodukten, wobei sich das Verfahren einen Hauptbehälter (2) für eine Siebdruckpaste, einen ersten Nebenbehälter (3) für ein Lösungsmittel und einen zweiten Nebenbehälter (4) für die Siebdruckpaste zu Nutze macht und logische Steuermittel (12, 13, 14, 15, 16) verwendet, die eine Speichereinheit (17) zum Speichern mindestens eines Referenzwertes mindestens einer chemischen-physikalischen Eigenschaft der Siebdruckpaste, Messmittel (12, 13, 14, 15) zum Messen eines Istwertes der chemisch-physikalischen Eigenschaft im Hauptbehälter (2) und Vergleichsmittel (18) zum Vergleichen des Istwertes mit dem Referenzwert umfassen, wobei es so ausgestattet ist, das Lösungsmittel des ersten Nebenbehälters (3) und/oder die Siebdruckpaste des zweiten Nebenbehälters (4) nach einem Signal der logischen Steuermittel (12, 20, 13, 14, 15, 16) dem Hauptbehälter (2) zuzuführen; wenn der Istwert der Dichte der von den Messmitteln (13) gemessenen Siebdruckpaste im Behälter (2) höher als der
entsprechende in der Speichereinheit (17) gespeicherte Referenzwert ist, wird die Speisepumpe (5) aktiviert, um dem Behälter (2) das im Behälter (3) enthaltene Lösungsmittel zuzuführen,
**dadurch gekennzeichnet, dass**:
wenn der von der Vorrichtung (12) gemessene Istwert der Temperatur der Siebdruckpaste im Behälter (2) niedriger als der entsprechende in der Speichereinheit (17) gespeicherte Referenzwert ist, wird der Widerstand (11) aktiviert, um die Siebdruckpaste zu erwärmen;
wenn der von den Messmitteln (13) gemessene Istwert der Dichte der Siebdruckpaste im Behälter (2) niedriger als der entsprechende in der Speichereinheit (17) gespeicherte Referenzwert ist, wird die Zuführpumpe (6) aktiviert, um die im Behälter (4) enthaltene Siebdruckpaste dem Behälter (2) zuzuführen;
wenn sich der von den Messmitteln (14) gemessene Istwert der Viskosität der Siebdruckpaste im Behälter (2) vom entsprechenden in der Speichereinheit (17) gespeicherten Referenzwert unterscheidet, wird die Zuführpumpe (6) aktiviert, um dem Behälter (2) die im Behälter (4) enthaltene Siebdruckpaste zuzuführen; und
wenn der von den Messmitteln (15) gemessene Istwert des Füllstandes der Siebdruckpaste im Behälter (2) niedriger als der entsprechende in der Speichereinheit (17) gespeicherte Referenzwert ist, wird die Zuführpumpe (6) aktiviert, um dem Behälter (2) die im Behälter (4) enthaltene Siebdruckpaste zuzuführen.

2. Verfahren nach Anspruch 1, wobei die Messmittel (12, 13, 14, 15) dazu geeignet sind, den Istwert der chemisch-physikalischen Eigenschaft im Hauptbehälter (2) kontinuierlich zu messen.

## Revendications

1. Procédé d'alimentation en pâtes de sérigraphie d'une machine pour la décoration de produits en céramique, ledit procédé utilisant un réservoir principal (2) pour une pâte de sérigraphie, un premier réservoir secondaire (3) pour un solvant et un second réservoir secondaire (4) pour ladite pâte de sérigraphie, et employant des moyens de contrôle logique (12, 13, 14, 15, 16) qui comprennent une unité de stockage (17) pour au moins mémoriser une valeur de référence d'au moins une caractéristique physico-chimique de la pâte de sérigraphie, des moyens de mesure (12, 13, 14, 15) pour mesurer une valeur réelle de ladite caractéristique physico-chimique dans le réservoir principal (2) et des moyens de comparaison (18) pour comparer ladite valeur réelle avec ladite valeur de référence ; étant prévu pour alimenter le réservoir principal (2) avec le solvant du premier réservoir secondaire (3) et/ou avec la pâte de sérigraphie du second réservoir secondaire (4) en suivant un signal desdits moyens de contrôle logique (12, 20, 13, 14, 15, 16), lorsque la valeur réelle de la densité de la pâte de sérigraphie contenue dans le réservoir (2) mesurée par les moyens de mesure (13) est supérieure à la valeur correspondante de référence stockée dans l'unité de stockage (17), la pompe d'alimentation (5) est activée pour alimenter le réservoir (2) avec le solvant contenu dans le réservoir (3) ;
**caractérisé en ce qu**
lorsque la valeur réelle de la température de la pâte de sérigraphie contenue dans le réservoir (2) mesurée par le dispositif (12) est inférieure à la valeur correspondante de référence stockée dans l'unité de stockage (17), la résistance (11) est activée pour réchauffer la pâte de sérigraphie ;
lorsque la valeur réelle de la densité de la pâte de sérigraphie contenue dans le réservoir (2) mesurée par les moyens de mesure (13) est inférieure à la valeur correspondante de référence stockée dans l'unité de stockage (17), la pompe d'alimentation (6) est activée pour alimenter le réservoir (2) avec la pâte de sérigraphie contenue dans le réservoir (4) ;
lorsque la valeur réelle de la viscosité de la pâte de sérigraphie contenue dans le réservoir (2) mesurée par les moyens de mesure (14) est différente de la valeur correspondante de référence stockée dans l'unité de stockage (17), la pompe d'alimentation (6) est activée pour alimenter le réservoir (2) avec la pâte de sérigraphie contenue dans le réservoir (4) ; et
lorsque la valeur réelle du niveau de la pâte de sérigraphie contenue dans le réservoir (2) mesurée par les moyens de mesure (15) est inférieure à la valeur correspondante de référence stockée dans l'unité de stockage (17), la pompe d'alimentation (6) est activée pour alimenter le réservoir (2) avec la pâte de sérigraphie contenue dans le réservoir (4).

2. Procédé selon la revendication 1, dans lequel lesdits moyens de mesure (12, 13, 14, 15) sont adaptés pour mesurer de façon continue la valeur réelle de ladite caractéristique physico-chimique dans le réservoir principal (2).
